Europäisches Patentamt

European Patent Office

Office européen des brevets

(19)

(11) Veröffentlichungsnummer: **0 104 557**
**A2**

(12) # EUROPÄISCHE PATENTANMELDUNG

(21) Anmeldenummer: 83109177.2

(22) Anmeldetag: 16.09.83

(51) Int. Cl.³: **G 01 G 3/12**

(30) Priorität: 27.09.82 US 424485

(43) Veröffentlichungstag der Anmeldung:
04.04.84 Patentblatt 84/14

(84) Benannte Vertragsstaaten:
AT BE CH DE FR GB IT LI NL SE

(71) Anmelder: HOTTINGER BALDWIN MESSTECHNIK
GMBH
Im Tiefen See 45 Postfach 42 35
D-6100 Darmstadt(DE)

(72) Erfinder: Lockery, Harry E.
115 Moore Road
Sudbury Massachusetts 02178(US)

(74) Vertreter: Brand, Fritz, Dipl.-Ing.
Hottinger Baldwin Messtechnik GmbH Patentabteilung
Im Tiefen See 45 Postfach 42 35
D-6100 Darmstadt(DE)

(54) Waage.

(57) Eine Plattform für eine Waage ist aus länglichen Elementen gebildet. Die länglichen Elemente sind starr miteinander verbunden, um einen Plattformrahmen zu bilden. Die Wandlerbalken mit Dehnungsmeßstreifen sind integral an jedem Ende der länglichen Elemente gebildet. Vertikale Lastkomponenten werden auf die Wandlerbalken übertragen, indem Füße unterhalb des Plattformrahmens so angeordnet sind, daß sich die Balken richtig biegen können. Die Lastübertragung von einer oberen Plattform auf die Wandlerbalken wird vorzugsweise durch Vorrichtungen mit Kugeln und Kugelpfannen erzielt, die an jedem Ende der länglichen Elemente der Rahmenstruktur angeordnet sind.

FIG. 2

EP 0 104 557 A2

Waage

Die Erfindung bezieht sich auf eine Waage mit Dehnungsmeßstreifen und mit oberen und unteren horizontalen Bauteilen, die in parallelen Ebenen zueinander angeordnet sind.

Eine Plattform für eine Waage, in der Wandlerbalken mit Dehnungsmeßfühlern oder -Streifen als integrale Komponenten der Plattform geformt sind, ist in der U.S. Patentschrift 4 261 429 beschrieben. Danach ist jeder Wandlerbalken mit Dehnungsmeßfühlern in der Plattform mit einem freien, biegsamen Ende und mit einem in die Platte integrierten festen oder Fußende als ein Teil der Plattform geformt. Dehnungsmeßfühler oder -Streifen sind an diesen biegsamen Wandlerbalken befestigt. Eine solche Plattform, in der die Wandlerbalken mit Dehnungsmeßfühlern als integrale Teile der Plattform ausgeführt sind, wird nachfolgend als "normierte Meßwandlerplatte" oder einfach als "normierte Platte" bezeichnet.

Gemäß dem Verfahren zur Herstellung normierter Meßwandlerplatten, das in dem U.S. Patent 4 261 429 offenbart ist, werden Gruppen mit jeweils vier Löchern durch die Platten gebohrt. Eine Mehrzahl von Einschnitten wird dann in die Plattform von der Seite her gefräst oder anderweitig gebildet, so daß die Einschnitte von der Plattformkante nach innen verlaufen. Zwei Einschnitte verlaufen parallel zueinander, so daß jeder Einschnitt zwei Löcher verbindet, um eine Balkenstruktur zu bilden. Von den vier Löchern einer Gruppe wird eines am festen Ende eines jeden Einschnitts gebohrt, während das andere Loch zwischen dem festen Ende und dem freien Ende jedes Wandlerbalkens mit Dehnungsmeßfühlern gebohrt wird.

- 2 -

Alle mit den Balkenstrukturen verbundenen Dehnungsmeßfühler sind elektronisch untereinander zu Brückenschaltungen verbunden, um eine Gewichtsanzeige für die Waage zu erhalten.

Solche normierten Meßwandlerplattenvorrichtungen oder Plattformen sind in den Waagen gemäß der europäischen Patentanmeldung Nr. 0065 176 eingebaut. Diese Patentanmeldung beschreibt Waagen mit Einrichtungen, um Wiegefehler auf ein Minimum zu reduzieren, die von der Einwirkung einer kurzzeitig wirksamen horizontalen Belastung herrühren. Die Waagen enthalten Kopplungsmittel, um vertikale Lastkomponenten in den Wandlerbalken mit Dehnungsmeßfühlern einzuführen, während sie die Einführung von Querlastkomponenten oder seitlichen Lastkomponenten in die Wandlerbalken mit Dehnungsmeßfühlern, die integral mit der Plattform gebildet sind, wesentlich vermindern oder verhindern.

Eine zu messende Belastung wird auf der oberen von zwei zueinander parallelen horizontalen Plattformen wirksam. Die Wandlerbalken mit Dehnungsmeßfühlern sind integral mit der unteren horizontalen Plattform gebildet. Kraft- übersetzende Stangen oder Arme sind an den Wandlerbalken mit Dehnungsmeßfühlern in der unteren Plattform befestigt, um eine vertikale Last von der oberen Plattform auf den jeweiligen biegsamen Wandlerbalken mit Dehnungsmeßfühlern zu übertragen und zwar mit Hilfe einer Kugel und Kugelpfannenkopplung, in welcher eine gehärtete Kugel gegen eine konkave oder gekrümmte Fläche anliegt, die einen Rundungshalbmesser hat, der größer ist, als der Radius der Kugel. Eine solche Kopplung mit ersten und zweiten gekrümmten Flächen überträgt vertikale Kraftkomponenten von der oberen horizontalen Plattform zu den Wandlerbalken mit Dehnungsmeßfühlern, während eine solche Kopplung horizontalen Kraftkomponenten ausweicht und wesentlich die Übertragung von horizontalen Kraftkomponenten zwischen der oberen und der unteren horizontalen Plattform verhindert.

Die Kopplung mit zwei gekrümmten Auflageflächen mit verschiedenen Rundungshalbmessern ist von einer flexiblen Hülse aus Gummi oder ähnlichem Material umschlossen. Die Hülse ist vorzugsweise an ihren Enden befestigt, so daß sich eine Dämpfung seitlicher Schwingungen ergibt. Außerdem schützt die Hülse die Kopplung gegen Verschmutzung.

Gemäß einem weiteren Ausführungsbeispiel werden vertikale Kraftkomponenten von der oberen horizontalen Plattzu den Wandlerbalken mit Dehnungsmeßfühlern mittels einer seitlich biegsamen Aufhängung, z.B. eine Kabelaufhängung, übertragen. Solche Kabelaufhängungen verhindern im wesentlichen ebenfalls die Übertragung von horizontalen Kraftkomponenten zwischen der oberen und der unteren horizontalen Plattform.

Waagen mit normierten Platten haben viele Vorteile, die insbesondere in deren niedrigem Profil, in der leichten Herstellung und in der Genauigkeit liegen. Eine massive Plattform ist jedoch relativ schwer und bedingt entsprechende Materialkosten. Der Gewichts- und Kostenfaktor wächst mit der Belastungsgrenze der Waage, z.B. wiegt eine einzige Plattform mit einer Aluminiumplatte mit den Maßen 762 x 762 x 12,7 mm, für eine Waage mit einer Belastungsgrenze von etwa 450 kg ungefähr 20,45 kg und kostet ca. DM 270,--. Weiterhin können derartige Waagen wenn sie nicht sehr sorgfältig hergestellt werden, gegen Verdrehungskraftkomponenten empfindlich sein, wodurch sich verfälschende Einflüsse auf die Gewichtsanzeige ergeben.

- 4 -

Es ist Aufgabe der Erfindung, die folgenden Zwecke einzeln oder in Kombination zu erfüllen:

die Materialmenge, die für normierte Platten benötigt wird, zu reduzieren, so daß damit auch das Gewicht und die Herstellungskosten reduziert werden, ohne Minderung der Leistungsfähigkeit;

eine verbesserte Waage mit integral gebildeten Wandlerbalken mit Dehnungsmeßfühlern, vorzugsweise in Leichtbauweise, zu schaffen, die bezüglich Verdrehungskräfte weniger empfindlich ist; und

die Stabilität und Betriebssicherheit zu verbessern.

Diese Aufgabe wird durch die Erfindung, wie sie in den Ansprüchen gekennzeichnet ist, gelöst. Mit der Erfindung wird eine einfach herzustellende Waage geschaffen, die trotz relativ geringer Massen eine große Stabilität besitzt und bei der verfälschende Einflüsse von Querkräften und Momenten auf das Meßergebnis vermieden werden.

Im folgenden wird die Erfindung anhand von in den Zeichnunge schematisch dargestellten Ausführungsbeispielen erläutert.

Es zeigen:

Fig. 1   einen Ausschnitt der Meßwandlerplatte nach U.S. Patent 4 261 429;

Fig. 2   eine Draufsicht des die Wandlerbalken mit Dehnungsmeßstreifen enthaltende Bauteils gemäß vorliegender Erfindung;

Fig. 3   eine Draufsicht auf eine andere Ausgestaltung des die Wandlerbalken mit Dehnungsmeßstreifen enthaltenden Bauteils nach der
         vorliegenden Erfindung;

Fig. 4   eine Draufsicht auf eine weitere Ausgestaltung des die Wandlerbalken mit Dehnungs-
         meßstreifen enthaltenden Bauteils mit läng-
         lichen Elementen, die sich überkreuzend angeordnet sind;

Fig.4a   einen fragmentarischen Schnitt gemäß A-A

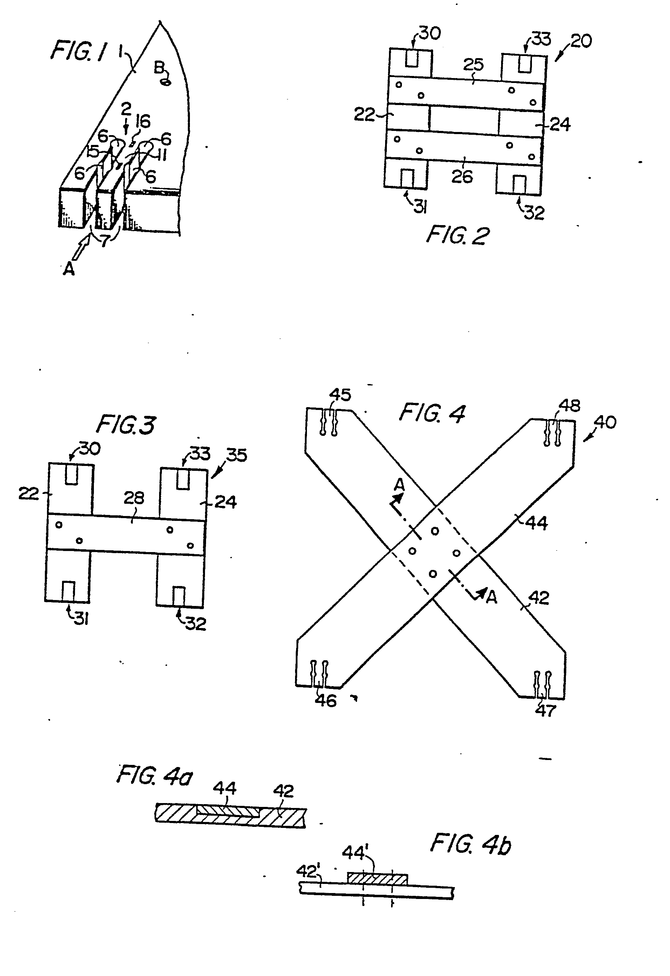

         in Fig. 4, der die Aussparungen zeigt, die
         erlauben, daß die sich kreuzenden länglichen Elemente im wesentlichen in einer
         gemeinsamen Ebene liegen;

Fig.4b   eine fragmentarische Seitenansicht einer
         Variante zu Fig. 4a;

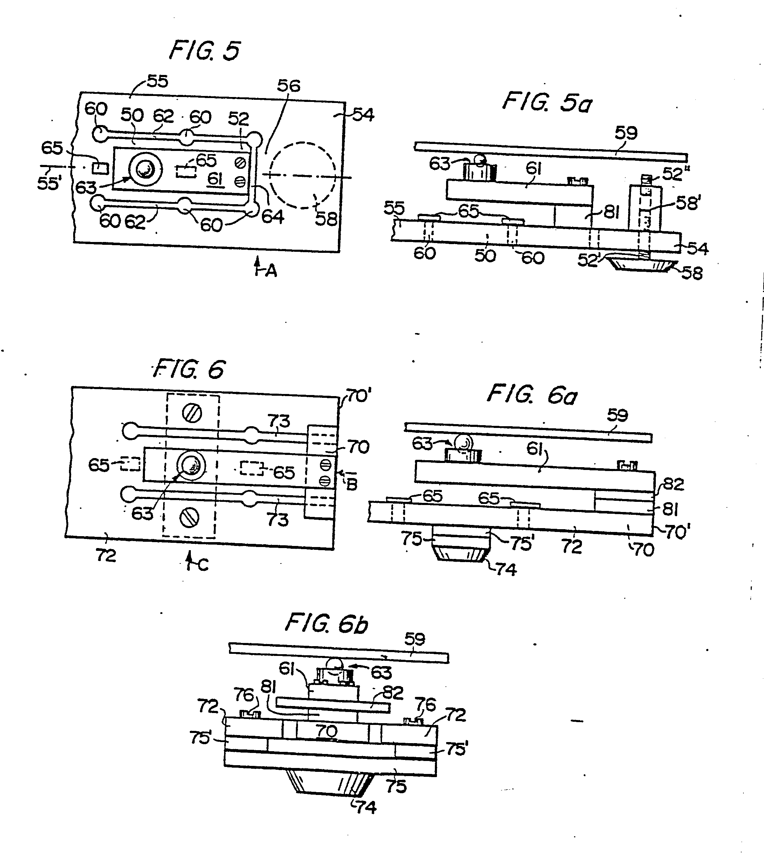

Fig. 5   eine fragmentarische Draufsicht  auf das Ende
         eines der länglichen Elemente eines Bauteils,
         die eine Anordnung der integralen Wandlerbalken mit Dehnungsmeßstreifen und des
         Stützfußes zeigt;

Fig.5a   eine Seitenansicht in Richtung des Pfeils A
         in Fig. 5;

Fig. 6   eine fragmentarische Draufsicht auf ein
         anderes längliches Element, die eine andere
         Ausführung des Wandlerbalkens mit Dehnungsmeßstreifen und dem Stützfuß zeigt;

Fig. 6a    eine Seitenansicht in Richtung des
           Pfeils C in Fig. 6;

Fig. 6b    eine Endansicht in der Richtung des
           Pfeils B in Fig. 6;

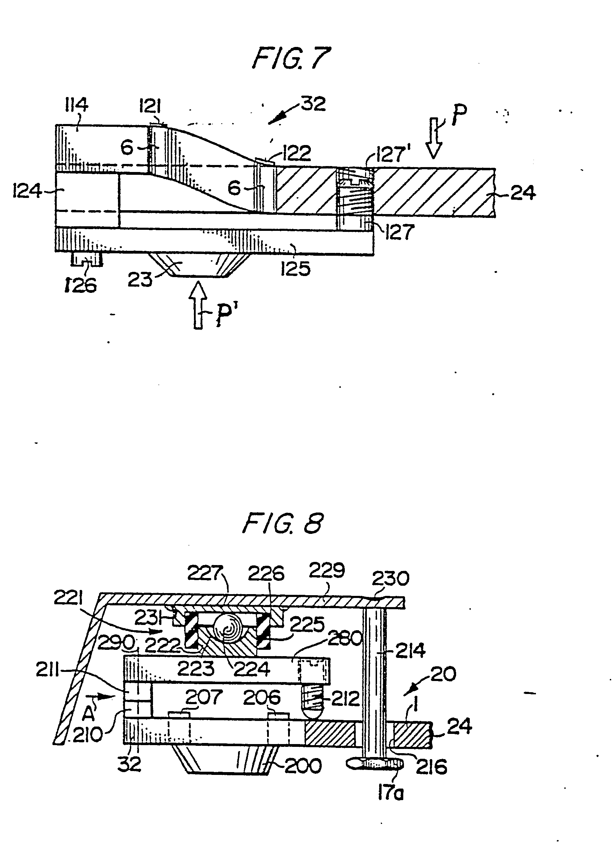

Fig. 7     eine Seitenansicht, teils im Schnitt,
           des Endes eines länglichen Elementes
           zur Darstellung der Lastaufbringung
           auf den integralen Wandlerbalken, und

Fig. 8     eine Seitenansicht, teils im Schnitt,
           einer anderen Version des länglichen
           Elementes mit Mitteln zum Aufbringen
           der Last auf den integralen Wandlerbalken des länglichen Elementes.

Figur 1 zeigt eine herkömmliche Plattform 1 mit
normierten Meßwandlerplatten, wie es im U.S. Patent
4 261 429 offenbart ist. Die Plattform 1 ist aus
Metall, z.B. aus einer Aluminiumlegierung, die für
diesen Zweck benutzbar ist, hergestellt. Eine geeignete Wandstärke für diese Plattform 1 ist z.B.
4,6 mm bis 12,7 mm für einen Lastbereich von ca.
13,6 bis 9o9 kg. Platten aus Legierungsstahl oder
rostfreiem Stahl können für Waagen mit höheren Lastbereichen benutzt werden. Vier Gruppen 2 von Bohrlöchern 6 sind ganz durch die Plattform 1 gebohrt
angeordnet. Die Lage der Lochgruppen kann relativ
zur Plattform unterschiedlich sein. Die Lochgruppen
sind üblicherweise in der Nähe der Ecken der Plattform angeordnet, wie es in Figur 1 gezeigt ist.

Ein Paar Schlitze 7 sind in jeder Gruppe von Löchern 6 in die Plattform 1 geschnitten, z.B. sind diese Einschnitte gesägt, maschinell bearbeitet, oder andernfalls gefräst, so daß sich jeder Einschnitt von einer Kante der Plattform aus nach innen erstreckt, um zwei Löcher mit der Kante zu verbinden, um einen Wandlerbalken 11 mit Dehnungsmeßfühlern als eine integrale Einheit mit der Plattformstruktur zu bilden. Dehnungsmeßfühler 15 und 16, z.B. Dehnungsmeßstreifen, sind üblicherweise auf dem Balken 11 befestigt, z.B. mit Klebemittel. Die Dehnungsmeßfühler sind vorzugsweise jeweils zwischen den Löchern 6 angeordnet.

Die Durchmesser der Löcher, Abstände und die Wandstärke der Plattform werden von den erforderlichen Lastbereichen oder Belastungsgrenzen der Waage abhängen. Diese Dimensionen werden auch mit Rücksicht auf die Empfindlichkeit der Waage bestimmt.

Figur 2 zeigt beispielsweise eine Lösung für die Herstellung einer Plattform gemäß der vorliegenden Erfindung. Gemäß der Erfindung wird keine einstückige Platte benutzt, um die Plattform herzustellen. Vielmehr ist die Plattform als eine Rahmenstruktur ausgebildet, um Materialkosten und Gewicht zu reduzieren. Wie es in Figur 2 gezeigt ist, enthält die "Plattform" 2o eine Rahmenstruktur, die von länglichen Elementen 22 und 24 gefertigt ist, die in einer gemeinsamen Ebene parallel zueinander und im Abstand voneinander angeordnet sind. Diese länglichen Elemente 22 und 24 können aus denselben Metallen und mit derselben Wandstärke und Länge hergestellt werden, wie mit Bezug auf die Plattform 1 in Figur 1 beschrieben. Normales Profilmaterial kann auch benutzt werden, um diese

- 8 -

länglichen Rahmenelemente 22 und 24 herzustellen. Die Rahmenelemente 22 und 24 sind mit dritten und vierten länglichen Verbindungselementen 25 und 26 verbunden, um eine feste Rahmenstruktur zu bilden. Die Verbindung kann üblicherweise durch Nieten, Schweißen, mit Muttern und Schrauben oder ähnlich ausgeführt werden.

Um eine Plattform 2o mit normierten Meßwandlerplatten herzustellen, werden Wandlerbalken mit Dehnungsmeßfühlern bzw. Streifen an jedem Ende der Elemente 22 und 24 als integrale Einheit gebildet. Die Wandlerbalken mit Dehnungsmeßfühlern 3o, 31, 32 und 33 werden in den jeweiligen Enden der Elemente 22 und 24 genauso hergestellt, wie bei Figur 1 beschrieben. Für geringere Belastungsgrenzen kann der Rahmen eine Gestalt haben, wie Figur 3 zeigt. In diesem Ausführungsbeispiel werden die parallelen länglichen Rahmenelemente 22 und 24 von einem einzigen verbindenden Querstück 28 auf Abstand gehalten und zu einer festen Struktur verbunden, um damit eine H-Form zu bilden. Abgesehen von der Form entspricht die Plattform 35 in Figur 3 der Plattform 2o in Figur 2; daher sind die gleichen Bezugszeichen für dieselben Teile benutzt worden.

Noch eine weitere Ausführung einer Plattform 4o mit einer X- oder Kreuz-Form ist in Figur 4 illustriert. In dieser Anordnung sind die länglichen Rahmenelemente 42 und 44 an dem Kreuzungspunkt verbunden, um eine feste Struktur zu bilden. Figur 4a zeigt, wie die länglichen Elemente 42 und 44 mit Aussparungen im Kreuzungsbereich versehen sind, um ineinander greifen zu können, so daß die unteren Flächen der Elemente 42 und 44 in einer gemeinsamen Ebene liegen.

Eine Plattformwaage mit einer Belastungsgrenze von
ca. 454 kg kann z.B. durch Verwendung einer Plattform mit einer normierten Meßwandlerplatte, gemäß
Figur 2 hergestellt werden, wodurch das Gewicht
der Plattform um 6o % bis 7o % reduziert wird im
Vergleich zum Gewicht einer Ausführung gemäß Figur
1, wobei eine erhebliche Materialkostenreduzierung
erreicht wird. Versuche mit einer Plattformwaage mit
einer Belastungsgrenze von 454 kg und mit einer Plattform gemäß 2o in Figur 2 haben gezeigt, daß der
Rahmen ein völlig gleichwertiges Betriebsverhalten
hat, wie eine normierte einstückige Platte gemäß
Figur 1. Eine Plattformwaage mit einer Belastungsgrenze von 68 kg und mit der Plattformrahmenkonstruktion gemäß 35 in Figur 3 wurde gebaut und geprüft
und es zeigte sich, daß diese Waage ein gleichwertiges
Betriebsverhalten hatte, wie eine Waage mit einer
einstückigen normierten Platte gleicher Belastungsgrenze gemäß Figur 1.

Wenn die einstückigen Plattformen durch erfindungsgemäße Rahmenstrukturen ersetzt werden, muß auf die
Stabilität der Rahmenstruktur geachtet werden, so
daß unbeabsichtigte oder unerwünschte Verdrehungskräfte vermieden werden, die andernfalls auf die
Wandlerbalken mit Dehnungsmeßfühlern, die integrale Teile der Rahmenstruktur sind, übertragen
werden und zu Verzerrungen der Gewichtsmessungen
führen können. Darum sind erfindungsgemäß Stützfüße für die Plattform an speziellen Stellen unter
der Plattform angeordnet, wie es nachfolgend beschrieben wird.

Bei der Vorrichtung gemäß U.S. Patent 4 261 429
sind Stützfüße innerhalb des biegsamen oder freien
Endes der Wandlerbalken an der Plattform angeordnet.

Dies ist für Waagen mit größeren Dimensionen in Ordnung. Wenn aber die Füße innerhalb der Wandlerbalken in Waagen mit kleineren Dimensionen angeordnet sind, kann es passieren, daß die Waage kippt, wenn die Last nahe an die Seitenkanten gestellt wird. Die Erfindung vermeidet das Kippen, indem die Füße vorzugsweise so nah wie möglich an der Kante des Rahmens angeordnet werden, wie es in Figur 5 gezeigt ist.

Bei der Ausführungsform gemäß den Figuren 5 und 5a bilden die Wandlerbalken 5o integrale Teile im Ende der länglichen Rahmenelemente 55, so daß die freien biegsamen Enden 52 der Wandlerbalken 5o mit Abstand vom jeweiligen Ende 54 der länglichen Rahmenelemente 55 angeordnet sind. Dieser Abstand definiert einen biegefesten "toten" Bereich 56 zwischen dem Wandlerbalken 5o und dem Ende 54 des länglichen Rahmenelementes 55. Gemäß der Erfindung ist der Fuß 58 jeweils am freien Ende 54 des Rahmenelementes 55 mit einer einstellbaren Schraube 52' in einer Gewindebuchse 58' im biegefesten Bereich 56 befestigt. Die Schraube 52' dient als Einstellvorrichtung für den Fuß 58, um die Waage zu nivellieren. Eine Anschlagschraube 52'' in derselben Gewindebuchse 58' dient als Überlastungsanschlag, wobei die Überlastung direkt in den Fuß eingeführt wird. Es ist ein Merkmal und ein Vorteil dieser Anordnung, daß die Nivellierfüße 58 außerhalb der Wandlerbalken 5o und so nah wie möglich an der Kante der Rahmenstruktur angeordnet sind, so daß ein Kippen der Rahmenstruktur vermieden wird. Durch Anordnung der Füße entlang der Zentrallängsachse 55' der länglichen Elemente werden Drehungskräfte in den länglichen Elementen 55 vermieden, weil die Kraft, die auf jeden Balken 5o wirkt, auch zentral zu den jeweiligen Elementen 55 wirkt und weil die Balken 5o zentral und symmetrisch in den Elementen 55 angeordnet sind. Da weiterhin die Füsse belastungsmäßig total von den Dehnungsmeßfühlern 65 isoliert sind, werden die Kontaktbelastungen unter den Füssen nicht in die Dehnungsmeßfühler 65 reflektiert und somit auch nicht mit gemessen.

Um einen Wandlerbalken gemäß der Figuren 5 und 5a herzustellen, wird eine Gruppe von sechs Bohrlöchern 6o in zwei Reihen ganz durch das längliche Element 55 gebohrt. Zwei längliche Schlitze 62 werden durch das längliche Element gefräst, geschnitten oder anderweitig gebildet, um die Löcher 6o zu verbinden. Zusätzlich ist ein Querspalt 64 an einem Ende eingeschnitten. Dieser Querspalt kann an dem einen oder dem anderen der beiden Enden angeordnet werden. Wie gezeigt, ist der integrale Wandlerbalken 5o in der Richtung der Zentrallängsachse 55' des Elementes 55 mit dem freien biegsamen Ende 52 in der Richtung auf das nächste Ende 54 ausgerichtet. Das Fußende, das in das Element 55 eingeht, ist in Richtung auf den geometrischen Mittelpunkt des Elementes 55 ausgerichtet. Dehnungsmeßfühler 65 sind zwischen den Bohrlochpaaren 6o auf dem Balken, wie in den Figuren 5 und 6 gezeigt, befestigt. Die einstellbare Schraube 52 ' erstreckt sich durch die Gewindebuchse 58'. Die Belastung auf einer oberen Plattform 59 wird über einen Ladearm 61, der am freien Ende des Balkens 5o mit einer Schraube und einem Distanzstück befestigt ist, auf den Balken 5o übertragen. Vorzugsweise ist eine Kugel mit Kugelpfannenlager 62 zwischen dem Ladearm 61 und der oberen Plattform 59 wirksam eingefügt.

Eine weitere Ausführungsform für den Wandlerbalken und die Stützfüße ist beispielsweise in Figuren 6, 6a und 6b gezeigt, in welchen die Wandlerbalken 7o mit Dehnungsmeßfühlern in der schon beschriebenen Weise in dem Ende der länglichen Rahmenelemente 72 gebildet sind. Bei dieser Ausführungsform reichen die Schlitze 73 bis an die Kante 7o'. Die Stützfüße 74 sind jeweils auf einer Brücke 75 montiert, die den Wandlerbalken 7o in dem länglichen Element 72 von einem Verbindungsmittel 76 zum anderen überbrückt. Mittels dieser Brücke 75 sind die Füße 74 genau zentral und symmetrisch unter den Belastungspunkt gesetzt. Diese Einrichtung hat den wichtigen Vorteil, daß unerwünschte Belastungen oder Momente nicht in die Waage eingeführt werden, weil die Verdrehungskräfte in beiden Richtungen entlang und quer zu dem länglichen Element 72 eliminiert werden. Dies ist besonders der Fall, wenn die Rahmenstruktur ein Kugel-Kugelpfannenlager verwendet, wie es in der europäischen Patentanmeldung oo65 176 näher beschrieben ist.

Die Plattform 59 ist in den Figuren 5 und 6 der Übersichtlichkeit wegen nicht dargestellt. Die Belastung des Wandlerbalkens 7o in den Figuren 6, 6a und 6b ist dieselbe, wie in Figuren 5 und 5a. Der Ladearm 61 ist mit einem Distanzstück 81 am freien Ende des Balkens 7o befestigt. Falls erforderlich, kann ein Überlastungsanschlag 82 am freien Ende des Balkens 7o, wie gezeigt, benutzt werden. Distanzstücke 75' sind auch zwischen der Brücke 75 und den Teilen der Elemente 72 außerhalb des Balkens 7o eingefügt, so daß sich der Balken 7o biegen kann.

Figur 7 zeigt eine Ecke einer erfindungsmäßen Rahmenstruktur, die in eine Waage gemäß U.S. Patent 4 261 429 eingebaut ist. Der Effekt der Belastung, die z.B. auf den Wandlerbalken 32 in Figur 7 wirkt,
ist in einer übertriebenen Weise dargestellt. Dieses
ist auch in Figur 5a der Fall.

In dem Beispiel gemäß Figur 7 ist die Rahmenstruktur
35 gemäß Figur 3 am Ende des länglichen Rahmenelementes 34 im Schnitt gezeigt. Der Wandlerbalken
mit Dehnungsmeßfühlern 32 ist deshalb in einer gebogenen Lage gezeigt, weil eine Last P auf die
Rahmenstruktur einwirkt. Die Dehnungsmeßfühler 121 sind
auf Zug, die Dehnungsmeßfühler 122 auf Druck belastet. Bei maximaler Belastung wird die Biegung
des Wandlerbalkens 32 von einem Überlastungsanschlag
127 begrenzt, wie gezeigt. Weitere, in Figur 7 nicht
sichtbare Überlastungsanschläge sind vor und hinter
dem Distanzstück 124, relativ zur Bildebene, vorgesehen.

Im Beispiel der Figur 7 besteht jeweils der Fuß 23,
über den die Reaktionskraft P' eingeleitet wird, aus
Gummi oder aus einem anderen elastischen Material
und ist am freien Ende 114 des Balkens 32 mit einem
Distanzstück 124 und einem Ladearm 125 befestigt.
Eine gleiche Vorrichtung ist an jeder Ecke der Rahmenstruktur angeordnet, um eine Plattform zu bilden.
Das äußere Ende jedes Ladearmes 125 ist an dem
Distanzstück 124 durch ein Verbindungsmittel 126,
z. B. eine Schraube oder dergleichen, befestigt.
Das innere Ende jedes Ladearmes 125 reicht weit genug
nach innen relativ zum länglichen Element 24, um
mit einem Überlastungsanschlag 127, der eine einstellbare Schraube in einem Gewindeloch 127' sein kann,
zusammenzuwirken.

- 14 -

Figur 8 zeigt als Ausschnitt das Ende eines länglichen
Rahmenelementes in einem andersartigen Aufhängersystem
für Waageplattformen. In diesem Beispiel bildet eine
Rahmenstruktur 2o oder 3o oder 4o gemäß den Figuren 2,
3 oder 4, das untere horizontale Glied mit einem Fuß
2oo, der auf einem Rahmenstrukturelement 24 montiert
ist, wie es z.B. in Figur 6a gezeigt ist. Die zweite
Plattform 229 bildet das zweite horizontale Glied oder
die obere Plattform, auf der die Belastung wirksam ist.
Eine Last, die auf die obere Plattform 229 gesetzt
wird, wird mit einem Kopplungsmittel 221 auf die untere
Rahmenplattform 2o übertragen, insbesondere auf den
Wandlerbalken 32 an den Enden der Plattformrahmenelemente 24. Dieses Kopplungsmittel 221 enthält einen
Kraftübertragungsarm 28o, der an dem freien Ende des
Wandlerbalkens 32 z. B. mit einem Schraubenbolzen 29o,
der durch Abstandsscheiben 21o, 211 hindurch geht,
befestigt ist. Ein einstellbarer Anschlag, z.B. eine
Anschlagschraube 212 in einem Gewindeloch am freien
Ende des Kraftübertragungsarmes 28o dient als Anschlag
bei maximaler Belastung gegen die nach oben gerichtete
Oberfläche des Rahmenelementes 24 der Plattform 2o,
um das Biegen des Wandlerbalkens 32 zu begrenzen. Ein
anderer Überlastungsanschlag (bei 32) ist nicht gezeigt, aber ist entweder hinter oder vor der Bildebene
angeordnet.

Weiterhin enthält das Kopplungsmittel 221, um vertikale
Lasten auf die Plattform 2o aufzubringen, eine gehärtete
Stahlpfanne 222, die oberhalb und ungefähr in der Mitte
zwischen den Dehnungsmeßfühlern 2o6 und 2o7 an dem Kraftübertragungsarm 28o befestigt ist. Die Pfanne 222 hat

- 15 -

eine Kalotte 223, die eine erste gekrümmte Fläche mit gegebenem Abrundungshalbmesser darstellt, der größer ist, als der Abrundungshalbmesser einer gehärteten Stahlkugel 224, die eine zweite gekrümmte Fläche darstellt. Ein Haltemittel für die Kugel 224 besteht aus einer biegsamen Länge eines Gummirohres oder eines Gummischlauches 225, der die Stahlkugel 224 in ihrer Position in der Kalotte 223 hält. Für diesen Zweck ist der biegsame Gummischlauch 225 an seinem oberen Ende in einem Halteglied 226 befestigt, das von der oberen Plattform 229 nach unten gerichtet ist. Der biegsame Schlauch 225 kann in dem Halteglied 226 mit Klebstoff oder dergleichen befestigt werden. Das Halteglied 226 kann an die Unterseite der oberen Plattform 229 geschweißt werden, wie es bei 231 gezeigt ist. Die obere Plattform 229, auf welche die Last gesetzt wird, drückt auf die Stahlkugel 224 über eine gehärtete Stahlplatte 227, die das Unterteil oder besser das Oberteil des Haltegliedes 226 bildet. Falls nötig, kann auch eine weitere, nicht gezeigte Ausgleichsscheibe vorgesehen sein. Die gehärtete Stahlplatte 227 und die Ausgleichsscheibe, falls eine benutzt wird, können aufgeklebt werden.

Im wesentlichen verhindert die Kugel-Kugelpfannenkopplung die Übertragung von Horizontalkräften oder Seitenkraftkomponenten zu der unteren Plattform 2o. Eine gewisse Beschränkung der relativen horizontalen Bewegungen ist jedoch erwünscht. Eine derartige Beschränkung ist mit dem biegsamen Schlauch 225 gegeben, der kleine Belastungen in der horizontalen Richtung beschränkt oder dämpft. Ein Bundbolzen 214 beschränkt größere Horizontalbelastungen, wenn der Bolzen 214 gegen die Fläche des jeweiligen Bohrloches 216 in dem länglichen Rahmenplattformelement 24 anliegt. Der Aufbau der Kopplung ist an jedem Ende der länglichen Rahmenplattformelemente, die die Ecken der Plattform 2o bilden, gleich. Der Bundbolzen 214 kann auch so angeordnet werden, daß er durch ein passendes Loch oder eine Bohrung 216 in dem Querglied der Rahmenstruktur hervorragt.

In ähnlicher Weise kann eine Aufhängung mit biegsamem Kabel in Kombination mit der vorliegenden Erfindung benutzt werden. Eine derartige Aufhängung ist in der europäischen Patentanmeldung 0065 176 mit Bezug auf Figur 7 beschrieben. Auf diese Weise kann die vorliegende-Erfindung nicht nur in Einzelplattformwaagen sondern auch in Doppelplattformwaagen benutzt werden. Verschiedene Arten von Kopplungen können in Kombination mit der vorliegenden Erfindung benutzt werden, um die Belastungskräfte auf die Wandlerbalken zu übertragen. Die zwei länglichen Rahmenelemente 42' und 44' in Figur 4b können miteinander in irgendeiner üblichen Weise in dem Kreuzungsbereich befestigt sein, ohne daß beide Glieder in derselben horizontalen Ebene liegen müssen. Distanzstücke, die nicht gezeigt sind, würden dann an den Enden eines der Elemente 42' oder 44 ' benutzt, um den Höhenunterschied auszugleichen.

Jedes der Belastungsanwendungsbeispiele kann an jeder Ecke der Waage oder besser an jedem Ende der länglichen Elemente, die die Rahmenstruktur bilden, benutzt werden. Bezüglich der Ausführungsbeispiele mit Kugel und Kugelpfannenlagerung könnte der biegsame Schlauch 225 in Figur 8 weggelassen werden, wenn das erwünscht ist.

Die Benutzung eines biegsamen Schlauches 225 hat jedoch den Vorteil, daß mit diesem Schlauch die richtige Dämpfung irgendwelcher Bewegungen der Waagenteile relativ zueinander erreicht wird.

Obwohl die Erfindung mit Bezug auf bestimmte Ausführungsbeispiele beschrieben ist, ist zu verstehen, daß es beabsichtigt ist, alle Änderungen und Äquivalente innerhalb des Schutzumfanges der beigefügten Ansprüche zu erfassen.

Patentansprüche:

1. Waage mit Dehnungsmeßstreifen und mit oberen und unteren horizontalen Bauteilen, die in parallelen Ebenen zueinander angeordnet sind, gekennzeichnet durch die folgenden Merkmale:

- das obere horizontale Bauteil (59, 229) dient zur Aufnahme einer Last (P), die zu wiegen ist;

- das untere horizontale Bauteil enthält Wandlerbalken mit Dehnungsmeßstreifen zum Messen der Gewichtskraft der Last (P);

- Lastübertragungsmittel sind wirksam zwischen dem oberen und dem unteren horizontalen Bauteil angeordnet, um vertikale Kraftkomponenten vom oberen horizontalen Bauteil auf die Wandlerbalken mit Dehnungsmeßstreifen zu übertragen, während gleichzeitig die Übertragung von horizontalen Kraftkomponenten zwischen den oberen und unteren horizontalen Bauteilen im wesentlichen verhindert wird;

- das untere horizontale Bauteil enthält wenigstens zwei längliche Elemente, die miteinander verbunden sind, um das untere Bauteil als starre Rahmeneinheit auszubilden;

- die Wandlerbalken mit Dehnungsmeßstreifen sind als integrale Teile der beiden länglichen Elemente nahe der Enden dieser länglichen Elemente ausgebildet;

- Füße sind wirksam relativ zu den Enden der beiden länglichen Elemente angeordnet, um eine Reaktionskraft (P'), auf die betreffenden integralen Wandlerbalken zu übertragen.

2. Waage gemäß Anspruch 1, dadurch gekennzeichnet, daß das untere horizontale Bauteil erste und zweite längliche Elemente (22, 24) enthält, die in einer gemeinsamen Ebene mit Abstand voneinander und im wesentlichen parallel zueinander angeordnet sind, sowie mindestens ein drittes längliches Verbindungselement (25, 26; 28), das die ersten und zweiten länglichen Elemente integral verbindet, um die starre Rahmeneinheit zu bilden.

3. Waage gemäß Anspruch 1, dadurch gekennzeichnet, daß das untere horizontale Bauteil erste und zweite längliche Elemente (42, 44) enthält, die in einer Überkreuzform angeordnet sind, und daß Verbindungsmittel vorgesehen sind, welche die ersten und zweiten länglichen Elemente in der Kreuzungszone starr miteinander verbinden.

4. Waage gemäß Anspruch 1, dadurch gekennzeichnet, daß der integrale Wandlerbalken (5o) mit Dehnungsmeßstreifen (65) vom Ende (54) des betreffenden länglichen Elementes (55) einen Abstand hat; jeder Wandlerbalken hat ein Fußende, das in das betreffende längliche Element (55) übergeht und zwar in Richtung zur Mitte der länglichen Elementes; jeder Wandlerbalken hat ein freies Ende, das sich auf das äußere Ende des länglichen Elementes hin erstreckt zur biegenden Bewegung des Wandlerbalkens relativ zum länglichen Element; das freie Ende des Wandlerbalkens hat einen Abstand vom Ende des entsprechenden länglichen Elementes, um eine nichtbiegende freie Zone (56)zwischen dem freien Ende des Wandlerbalkens und dem Ende des länglichen Elementes zu schaffen; Befestigungsmittel (52', 58 ') befestigen den Fuss (58) an dieser nichtbiegenden freien Zone am Ende des länglichen Elementes außerhalb des betreffenden Wandlerbalkens; die Lastübertragungsmittel enthalten einen Arm (61) zwischen dem oberen Glied (59) und dem freien Ende.des betreffenden Wandlerbalkens um den Wandlerbalken zu deformieren.

5. Waage gemäß Anspruch 1, dadurch gekennzeichnet, daß jeder der integralen Wandlerbalken durch drei Schlitze (62, 64) in den länglichen Elementen gebildet wird; zwei Schlitze (62) sind parallel zueinander angeordnet; der dritte Schlitz (64) verbindet die parallelen Schlitze an einem Ende der parallelen Schlitze, um das freie Ende des Wandlerbalkens zu bestimmen; Löcher (6o) sind entlang der Schlitze in das längliche Element gebohrt am freien Ende, am Fußende und zwischen dem freien Ende und dem Fußende, so daß insgesamt sechs Löcher vorgesehen sind.

6. Waage gemäß Anspruch 1, dadurch gekennzeichnet, daß die Füße eine Brücke (75) enthalten, um den betreffenden Wandlerbalken (7o) an der Unterseite des länglichen Elementes zu überbrücken; jede Brücke enthält einen Fuß (74), der zentral unter dem betreffenden Wandlerbalken und unter dem Lastangriffspunkt auf dem Boden steht.

7. Waage gemäß Anspruch 6, dadurch gekennzeichnet, daß jeder Wandlerbalken dadurch gebildet ist, daß in den betreffenden Enden der beiden länglichen Elemente Schlitze parallel zu den Längsseiten des betreffenden länglichen Elementes verlaufen, und daß in jedem Wandlerbalken Löcher vorgesehen sind, die im wesentlichen am Ende der Schlitze und zwischen den Enden der Schlitze gebohrt sind.

8. Waage mit Dehnungsmeßstreifen, einer Plattform und Wandlerbalken, die als integraler Teil der Plattform ausgebildet sind, wobei die Wandlerbalken die Dehnungsmeßstreifen tragen, ein festes Fußende besitzen, das in die Plattform übergeht und Füße so angebracht sind, daß auf das freie Ende des betreffenden Wandlerbalkens eingewirkt werden kann, dadurch gekennzeichnet, daß mindestens zwei längliche Elemente im wesentlichen in einer gemeinsamen Ebene angeordnet sind, daß die länglichen Elemente starr miteinander verbunden sind, und daß die Wandlerbalken, die die Dehnungsmeßstreifen tragen, nahe den Enden als integrale Teile in den beiden länglichen Elementen ausgebildet sind.

9. Waage gemäß Anspruch 8, dadurch gekennzeichnet, daß die Plattform erste und zweite längliche Elemente enthält, die parallel zueinander und mit Abstand voneinander angeordnet sind, und daß mindestens ein drittes längliches Verbindungselement vorgesehen ist, das die beiden ersten länglichen Elemente miteinander verbindet, um eine starre Einheit zu bilden.

10. Waage gemäß Anspruch 8, dadurch gekennzeichnet, daß die Wandlerbalken an jedem Ende der länglichen Elemente innerhalb der äußeren Begrenzungswände der länglichen Elemente angeordnet sind und zwar mit Abstand von jedem Ende, so daß jeder Wandlerbalken gänzlich im entsprechenden länglichen Element enthalten ist.

11. Waage gemäß Anspruch 1o, dadurch gekennzeichnet, daß jeder Wandlerbalken zwei Schlitze enthält, die nahe den entsprechenden Enden im länglichen Element gebildet sind, die beiden Schlitze sind parallel zueinander angeordnet und durch einen dritten Schlitz miteinander verbunden, um das freie Ende zu definieren, jeder Wandlerbalken wird ferner durch Löcher gebildet, die durch das längliche Element am freien Ende, am Fußende und zwischen dem freien Ende und dem Fußende gebohrt sind.

12. Waage gemäß Anspruch 11, dadurch gekennzeichnet, daß das freie Ende auf das äußere Ende des länglichen Elementes hinweist, und daß das Fußende auf die Mitte des entsprechenden länglichen Elementes hinweist.

13. Waage gemäß Anspruch 8, dadurch gekennzeichnet, daß die Wandlerbalken integral nahe jedem Ende der beiden länglichen Elemente innerhalb der Enden der länglichen Elemente angeorndet sind, daß die Wandlerbalken durch Schlitze in den Enden der länglichen Elemente gebildet sind, wobei die Schlitze derart angeordnet sind, daß ein länglicher Wandlerbalken mit einem biegsamen freien Ende und mit einem steifen Fußende gebildet ist, und daß Lastübertragungsmittel vorgesehen sind, die am freien Ende des Wandlerbalkens wirksam sind.

14. Waage gemäß Anspruch 13, dadurch gekennzeichnet, daß die Anordnung der Schlitze drei Schlitze enthält, zwei Schlitze verlaufen parallel zueinander und der dritte Schlitz verbindet die beiden parallelen Schlitze an einem Ende der Schlitze, und daß drei Löcher an jedem Schlitz entlang angeordnet sind.

15. Waage gemäß Anspruch 1 oder 13, dadurch gekennzeichnet, daß die Lastübertragungsmittel Kugel und Kugelpfannenelemente enthalten, die wirksam zwischen einer Last und den integral konstruierten Wandlerbalken eingesetzt sind.

16. Waage gemäß Anspruch 4, dadurch gekennzeichnet, daß die Befestigungsmittel ein Gewinde und eine Einstellschraube in dem Gewinde enthalten, um die Waage zu nivellieren, und daß eine einstellbare Feststellschraube in dem gleichen Gewinde vorgesehen ist, um einen Überlastanschlag zu bilden, der eine Überlastung direkt in den Fuß einführt.

FIG. 1

FIG. 2

FIG.3

FIG. 4

FIG. 4a

FIG. 4b

0104557

FIG. 5

FIG. 5a

FIG. 6

FIG. 6a

FIG. 6b

C104557

FIG. 7

FIG. 8